(19) Europäisches Patentamt
European Patent Office
Office européen des brevets

(11) **EP 4 614 844 A1**

(12) **EUROPEAN PATENT APPLICATION**
published in accordance with Art. 153(4) EPC

(43) Date of publication:
**10.09.2025 Bulletin 2025/37**

(21) Application number: **23896447.2**

(22) Date of filing: **03.11.2023**

(51) International Patent Classification (IPC):
*H04J 14/02* (2006.01)   *G01S 7/4861* (2020.01)

(52) Cooperative Patent Classification (CPC):
**G01S 7/481; G01S 7/4861; G02B 6/46; H04J 14/02**

(86) International application number:
**PCT/CN2023/129532**

(87) International publication number:
**WO 2024/114293 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 PCT/CN2022/135064**

(71) Applicant: **Shenzhen Yinwang Intelligent
Technologies Co., Ltd.
Shenzhen, Guangdong 518129 (CN)**

(72) Inventors:
• **ZHANG, Shaopeng
Shenzhen, Guangdong 518129 (CN)**
• **LIU, Jun
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DETECTION APPARATUS, LIGHT LOOPING METHOD AND TERMINAL**

(57)    Embodiments of this application provide a detection apparatus, an optical loopback method, and a terminal. The detection apparatus may be a lidar, and may be applied to the detection field, the intelligent surveying and mapping field, the intelligent driving field, and other fields. The detection apparatus includes an emission module, a receiving module, an optical assembly, and an optical fiber. Alight beam emitted by an emission module is transmitted to the optical fiber through the optical assembly, and is transmitted to the receiving module through the optical fiber. A stable optical loopback path is constructed based on the optical fiber. This can improve detection accuracy of the detection apparatus. The optical fiber is flexibly routed and selected. The emission module and the receiving module can be adapted by adjusting a position and an angle of a receiving end of the optical fiber, a model of the optical fiber, and a position of an emergent end of the optical fiber, to reduce a selection difficulty. According to embodiments of this application, the stable optical loopback path is constructed based on the optical fiber, a structure of the detection apparatus is simplified, a component adaptation difficulty is reduced, and detection accuracy can be improved.

FIG. 3

## Description

This application claims priority to Chinese Patent Application No. PCT/CN2022/135064, filed with the China National Intellectual Property Administration on November 29, 2022 and entitled "DETECTION APPARATUS, OPTICAL LOOPBACK METHOD, AND TERMINAL", which is incorporated herein by reference in its entirety.

## TECHNICAL FIELD

This application relates to the field of detection technologies, and in particular, to a detection apparatus, a method, and a terminal.

## BACKGROUND

A lidar (light detection and ranging, LiDAR) is an optical measurement device whose working principle is to emit a laser signal to an object, receive a target echo signal reflected by the object, and then compare the target echo signal with the laser signal to obtain related detection parameters such as a position and a distance of the object.

A circuit drive signal is an electrical signal that drives a light source to emit light. The circuit drive signal drives the light source to emit light to generate a laser signal. The detection parameter is calculated by using a moment of generating the circuit drive signal as an input. However, there is a delay from generation of the circuit drive signal to generation of the laser signal, and duration of the delay is affected by external temperature changes and system aging. As a result, object detection accuracy is reduced.

## SUMMARY

Embodiments of this application provide a detection apparatus, an optical loopback method, and a terminal, to improve object detection accuracy.

According to a first aspect, an embodiment of this application provides a detection apparatus, where the detection apparatus includes an emission module, an optical fiber, and an optical assembly. The emission module emits a first light beam, the optical assembly transmits the first light beam to the optical fiber, and then the first light beam is transmitted to the receiving module by the optical fiber. Thanks to a total reflection feature of the optical fiber, an optical path from the emission module to the receiving module that is constructed by using the optical fiber has better stability. In addition, the optical fiber is flexibly routed and selected, and the emission module and the receiving module may be adapted by adjusting a position and an angle of a receiving end of the optical fiber, a model of the optical fiber, and a position of an emergent end of the optical fiber, to reduce a selection difficulty. The optical path is constructed by using the optical fiber, so that internal space of the apparatus can be saved. An optical path used to measure a delay from generation of a circuit drive signal to generation of a laser signal is referred to as an optical loopback. The delay changes due to external temperature changes and system aging. A delay from emitting of the circuit drive signal to emitting of an optical signal by a light source is measured by using the optical loopback, so that object detection accuracy can be improved.

In a possible implementation of the first aspect, the detection apparatus further includes a processing module; the processing module obtains a first electrical signal that causes the emission module to emit the first light beam, and the receiving module generates a second electrical signal corresponding to the first light beam after receiving the first light beam; and the processing module obtains the second electrical signal, and calculates a time difference between the first electrical signal and the second electrical signal.

The first electrical signal drives the emission module to emit the first light beam, and a time from emitting of the first light beam to generation of the second electrical signal may be ignored. Therefore, a time difference between a moment at which the processing module obtains the first electrical signal and a moment at which the processing module obtains the second electrical signal is a delay from generation of a circuit drive signal to generation of a laser signal.

Through calibrating for the detection apparatus, a calibration value adapting to the delay is given to offset impact of the delay on detection accuracy. When the delay changes due to external temperature changes and system aging, an error between the delay and the initial calibration value of the detection apparatus reduces detection accuracy. By constructing the optical loopback, a value of the delay can be obtained in real time, so that the calibration value can be adjusted to improve detection accuracy.

In a possible implementation of the first aspect, the optical assembly includes a scanning module, the scanning module transmits the first light beam to the optical fiber at a first scanning angle, and the first scanning angle is an angle at which the detection apparatus does not detect an external target.

For the optical assembly with the scanning module, a scanning angle range of the scanning module in a scanning cycle includes a scanning angle range for detecting an external target and a scanning angle range for not detecting an external target. When a scanning angle of the scanning module is within the scanning angle range for detecting the external target, the scanning module is configured to detect the external target. When the scanning angle of the scanning module is within the scanning angle range for not detecting the external target, the first light beam is transmitted to the optical fiber through the scanning module, so that an optical loopback path can be established for the optical assembly with the scanning module, without affecting detection performance of the scanning module.

In a possible implementation of the first aspect, the optical assembly includes at least one reflector, and the first light beam is used to detect an external target or perform an optical loopback through the optical path constructed by the optical assembly.

In a possible implementation of the first aspect, an energy loss value of the first light beam is greater than a first threshold and less than a second threshold, and a range of the energy loss value of the first light beam is related to an emission power range of the emission module and a receiving power range of the receiving module.

The energy loss value of the first light beam is a difference between energy emitted by an emitting end and energy received by the receiving end. The first light beam emitted by the emission module has a specific power range, and a power of a light beam that can be received by the receiving module also has a specific power range. Therefore, the energy loss value of the first light beam in the transmission process needs to be in a specific range, so that the emission module matches the receiving module, to successfully establish the optical loopback path.

In a possible implementation of the first aspect, a value of an optical fiber span energy loss of the first light beam is β, where β satisfies the following formula:

$$\beta = 10 \times \log(P\_in / P\_out)$$

P_in is a magnitude of input energy of the optical fiber, and P_out is a magnitude of output energy of the optical fiber. The value of the optical fiber span energy loss of the first light beam is a part of the energy loss value of the first light beam, and is an energy loss value after the first light beam passes through the optical fiber. The energy loss value of the first light beam may be adjusted by adjusting the value of the optical fiber span energy loss. For example, the input energy is affected by adjusting a position and an angle of an incident end of the optical fiber. For another example, the output energy may be adjusted by selecting optical fibers of different models.

In a possible implementation of the first aspect, a receiving end of the optical fiber is fastened at a first position, an angle at which the first light beam is incident to the optical fiber is a first angle θ, both the first position of the receiving end of the optical fiber and the first angle θ at which the first light beam is incident to the optical fiber may affect the energy loss value of the first light beam by affecting a magnitude of energy input to the optical fiber, and the first position and the first angle may be selected based on the emission power range of the emission module and the receiving power range of the receiving module. Different energy loss values of the first light beam may be generated based on selection of different first positions and first angles, so that a requirement for a larger working range of the emission module and the receiving module can be met, and a selection difficulty is reduced.

In a possible implementation of the first aspect, the receiving module includes a detector and a fastening apparatus, the fastening apparatus is provided with a through hole, the emergent end of the optical fiber is fastened at a second position, and the first light beam is transmitted to the detector through the through hole. The energy loss value of the first light beam is related to the second position, and an insertion depth of the optical fiber in the through hole affects a power of the first light beam received by the detector. The second position and the insertion depth of the optical fiber affect a distance between the emergent end of the optical fiber and the detector. After the light beam is emitted from the optical fiber, the light beam is no longer centralized, and the distance between the emergent end and the detector affects a magnitude of receiving energy of the detector. Therefore, an emission power of the emission module and a receiving power of the receiving module may be matched by adjusting the insertion depth and the second position.

In a possible implementation of the first aspect, the energy loss value of the first light beam is related to an optical fiber parameter, and the optical fiber parameter includes a core diameter of the optical fiber and a numerical aperture of the optical fiber. Different types of optical fibers have different optical fiber parameters, and may generate different energy losses. The energy loss value of the first light beam may be adjusted by selecting different types of optical fibers, to match the emission power of the emission module with the receiving power of the receiving module.

In a possible implementation of the first aspect, the emission module may include one or more light emitting elements. The plurality of light emitting elements may have different emission powers, and may be adapted to different detection scenarios. For example, a light emitting element with a high power may be configured to detect a target in a long distance, and a light emitting element with a low power may detect a target in a short distance.

In a possible implementation of the first aspect, the apparatus further includes a coupler, and the coupler may couple a plurality of optical fibers into one optical fiber, to transmit the first light beam to the receiving module. A plurality of light sources may correspond to a plurality of optical fibers, and corresponding first positions and first angles are matched based on respective parameters, to meet requirements of different light sources for different light beam energy loss values. The coupler couples the plurality of optical fibers into one optical fiber, to transmit the light beam to the receiving module, which facilitates assembly on a receiving module side.

In a possible implementation of the first aspect, the detection apparatus further includes a fastening module, and the fastening module may fasten the optical fiber at a required position. Optionally, the optical fiber fastening module may be a glass tube or an optical fiber clamp, the optical fiber clamp is provided with a groove, an angle of the groove corresponds to a required first angle, and the angle of the groove may be determined based on the required first angle. The fastening apparatus fastens the optical fiber, so that the optical fiber apparatus has a fixed first position and a fixed first angle, thereby maintaining stability of the optical path and ensuring use performance of the detection apparatus.

According to a second aspect, a detection apparatus is provided, where the detection apparatus includes an emitter, a receiver, an optical fiber, and a first optical lens group. The emitter emits a first light beam, the first optical lens group transmits the first light beam to the optical fiber, the light beam transmits the first light beam to the receiver, and the receiver receives the first light beam.

In a possible implementation of the second aspect, the detection apparatus further includes a processor, the processor obtains a first electrical signal that causes the emitter to emit the first light beam, and the receiver generates a second electrical signal corresponding to the first light beam after receiving the first light beam; and the processor obtains the second electrical signal, and calculates a time difference between the first electrical signal and the second electrical signal.

In a possible implementation of the second aspect, the detection apparatus further includes a polyhedron rotating mirror. The polyhedron rotating mirror transmits the first light beam to the optical fiber at a first scanning angle, and the first scanning angle is an angle at which the detection apparatus does not detect an external target. The polyhedron rotating mirror may perform overall movement to form reflective surfaces at a plurality of angles. For example, the overall movement includes movement such as swing or rotation. The polyhedron rotating mirror forms reflective surfaces at a plurality of angles, so that the detection apparatus can implement external detection in a specific range, and an optical path is formed inside the detection apparatus to implement an optical loopback, thereby measuring a delay to improve distance detection accuracy.

According to a third aspect, this application provides an optical loopback method, where the method is applied to a detection apparatus, and the detection apparatus includes an emission module, an optical fiber, and a first optical assembly. The emission module emits a first light beam, the first optical assembly transmits the first light beam to the optical fiber, and then the first light beam is transmitted to the receiving module through the optical fiber. Optionally, the detection apparatus is the detection apparatus according to the first aspect or any optional implementation.

According to a fourth aspect, an embodiment of this application provides a detection apparatus, where the detection apparatus includes an emission module, a receiving module, and an optical fiber. The emission module is configured to emit a detection light beam, where the detection light beam includes a main light part and a residual light part, the main light part of the detection light beam is used to detect an external target, and the residual light part of the detection light beam is transmitted to the optical fiber; the optical fiber is configured to transmit the residual light part of the detection light beam to the receiving module; and the receiving module is configured to receive the residual light part of the detection light beam.

In a possible implementation of the fourth aspect, the detection apparatus further includes a processing module, the processing module is configured to obtain a first electrical signal, and the first electrical signal is used to cause the emission module to emit the detection light beam; the processing module is configured to receive a second electrical signal, and the second electrical signal corresponds to the residual light part that is of the detection light beam and that is received by the receiving module; and the processing module is configured to calculate a time difference between the first electrical signal and the second electrical signal.

In a possible implementation of the fourth aspect, a first emission angle of the emission module is used for the residual light part of the detection light beam to be transmitted to the optical fiber.

In a possible implementation of the fourth aspect, an energy loss value of the residual light part of the first part of the light beam is greater than a first threshold and less than a second threshold, and a range of the energy loss value of the residual light part of the detection light beam is related to an emission power range of the emission module and a receiving power range of the receiving module.

In a possible implementation of the fourth aspect, a value of an optical fiber span energy loss of the residual light part of the detection light beam is $\beta$, and $\beta$ satisfies the following formula:

$$\beta = 10 \times \log(P\_in/P\_out)$$

P_in is a magnitude of input energy of the optical fiber, and P_out is a magnitude of output energy of the optical fiber.

In a possible implementation of the fourth aspect, a receiving end of the optical fiber is fastened at a first position, an angle at which the residual light part of the detection light beam is incident to the optical fiber is a first angle $\theta$, and an energy loss value of the residual light part of the detection light beam is related to at least one of the first position and the first angle $\theta$.

In a possible implementation of the fourth aspect, the receiving module includes a detection element and a fastening apparatus, the fastening apparatus is provided with a through hole, an emergent end of the optical fiber is fastened at a second position, and the first light beam is transmitted to the receiving module through the through hole, where the energy loss value of the residual light part of the detection light beam is related to the second position.

In a possible implementation of the fourth aspect, the energy loss value of the residual light part of the detection light beam is related to an optical fiber parameter, and the optical fiber parameter includes a core diameter of the optical fiber and a numerical aperture of the optical fiber.

In a possible implementation of the fourth aspect, the emission module includes one or more light emitting elements.

In a possible implementation of the fourth aspect, the residual light part of the detection light beam includes a first part of residual light, the first part of residual light is emitted out of the emission module, an incident end of the optical fiber is located outside the emission module, and the optical fiber is specifically configured to: receive the first part of residual light from the light emitting element, and transmit the first part of residual light to the receiving module; and the receiving module is specifically configured to receive the first part of residual light.

In a possible implementation of the fourth aspect, the residual light part of the detection light beam includes a second part of residual light, the second part of residual light is not emitted out of the emission module, an incident end of the optical fiber is located inside the emission module, and the optical fiber is specifically configured to: receive the second part of residual light from the light emitting element, and transmit the second part of residual light to the receiving module; and the receiving module is specifically configured to receive the second part of residual light.

In a possible implementation of the fourth aspect, the apparatus further includes a coupler, where the coupler is configured to couple a plurality of optical fibers into one optical fiber, to transmit the residual light part of the detection light beam to the receiving module.

In a possible implementation of the fourth aspect, the apparatus further includes an optical fiber fastening module, and the optical fiber fastening module is configured to fasten the optical fiber. The optical fiber fastening module is a glass tube or an optical fiber clamp, the optical fiber clamp is provided with a groove, and the first angle θ is related to an angle of the groove.

According to a fifth aspect, an embodiment of this application provides a detection apparatus, and the detection apparatus includes an emission module, a receiving module, and an optical fiber. The emission module includes a plurality of light emitting elements, and a first light emitting element in the plurality of light emitting elements is configured to: emit a second light beam, and transmit the second light beam to the optical fiber; the optical fiber is configured to transmit the second light beam to the receiving module; and the receiving module is configured to receive the second light beam.

In a possible implementation of the fifth aspect, the detection apparatus further includes a processing module, the processing module is configured to obtain a first electrical signal, and the first electrical signal is used to cause the emission module to emit the second light beam; the processing module is configured to receive a second electrical signal, and the second electrical signal corresponds to the second light beam received by the receiving module; and the processing module is configured to calculate a time difference between the first electrical signal and the second electrical signal.

In a possible implementation of the fifth aspect, the second light beam is emitted out of the emission module, and an incident end of the optical fiber is located outside the emission module; or the second light beam is not emitted out of the emission module, and an incident end of the optical fiber is located inside the emission module.

In a possible implementation of the fifth aspect, a first emission angle of the first light emitting element is used for the second light beam to be transmitted to the optical fiber.

According to a sixth aspect, an embodiment of this application provides a detection apparatus, and the detection apparatus includes an emitter, a receiver, and an optical fiber. The emitter is configured to emit a detection light beam, where the detection light beam includes a main light part and a residual light part, the main light part of the detection light beam is used to detect an external target, and the residual light part of the detection light beam is transmitted to the optical fiber; the optical fiber is configured to transmit the residual light part of the detection light beam to the receiver; and the receiver is configured to receive the residual light part of the detection light beam.

In a possible implementation of the sixth aspect, the detector further includes a processor, the processor is configured to obtain a first electrical signal, and the first electrical signal is used to cause the emitter to emit the detection light beam; the processor is configured to receive a second electrical signal, and the second electrical signal corresponds to the residual light part that is of the detection light beam and that is received by the receiver; and the processor is configured to calculate a time difference between the first electrical signal and the second electrical signal.

In a possible implementation of the sixth aspect, a first emission angle of the emitter is used for the residual light part of the detection light beam to be transmitted to the optical fiber.

In a possible implementation of the sixth aspect, the emitter includes one or more light emitting elements.

In a possible implementation of the sixth aspect, the residual light part of the detection light beam includes a first part of residual light, the first part of residual light is emitted out of the emitter, an incident end of the optical fiber is located outside the emitter, and the optical fiber is specifically configured to: receive the first part of residual light from the light emitting element, and transmit the first part of residual light to the receiver; and the receiver is specifically configured to receive the first part of residual light.

In a possible implementation of the sixth aspect, the residual light part of the detection light beam includes a second part of residual light, and the second part of residual light is not emitted out of the emitter; the incident end of the optical fiber is located inside the emitter, and the optical fiber is specifically configured to: receive the second part of residual light from the light emitting element, and transmit the second part of residual light to the receiver; and the receiver is specifically configured to receive the second part of residual light.

According to a seventh aspect, an embodiment of this application provides an optical loopback method. A detection apparatus includes an emission module, a receiving module, and an optical fiber. The method includes: The emission module emits a detection light beam, where the detection light beam includes a main light part and a residual light part, the main light part of the detection light beam is used to detect an external target, and the residual light part of the detection light beam is transmitted to the optical fiber; the optical fiber transmits the residual light part of the detection light beam to the receiving module; and the receiving module receives the residual light part of the detection light beam. Optionally, the detection apparatus is the detection apparatus according to any optional implementation of the fourth aspect or the fifth aspect.

According to an eighth aspect, an embodiment of this application provides a terminal, where the terminal includes the detection apparatus according to any implementation of the first aspect, or the terminal includes the detection apparatus according to any implementation of the second aspect, or the terminal includes the detection apparatus according to any implementation of the fourth aspect, or the terminal includes the detection apparatus according to any implementation of the fifth aspect. Optionally, the terminal is a vehicle, an uncrewed aerial vehicle, or a robot.

For effects brought by the implementations corresponding to the second aspect to the eighth aspect, refer to descriptions of various implementations in the first aspect. Details are not described herein again.

**BRIEF DESCRIPTION OF DRAWINGS**

FIG. 1 is a diagram of an application scenario of a detection apparatus;

FIG. 2a is a diagram of sending and receiving time sequences of a detection apparatus;

FIG. 2b is a diagram of a principle of a detection apparatus;

FIG. 2c is a diagram of a principle of a detection apparatus;

FIG. 3 is a diagram of a detection apparatus according to this application;

FIG. 4a is a diagram of a detection apparatus according to this application;

FIG. 4b is a diagram of a detection apparatus according to this application;

FIG. 4c is a diagram of a coupler according to this application;

FIG. 5 is a diagram of a detection apparatus according to this application;

FIG. 6a is a diagram of a detection apparatus according to this application;

FIG. 6b is a diagram of a detection apparatus according to this application;

FIG. 6c is a diagram of an emission module according to this application;

FIG. 6d is a diagram of a detection apparatus according to this application;

FIG. 6e is a diagram of a detection apparatus according to this application;

FIG. 6f is a diagram of a detection apparatus according to this application;

FIG. 6g is a diagram of a detection apparatus according to this application;

FIG. 7 is a diagram of a receiving module of a detection apparatus according to this application;

FIG. 8 is a diagram of an optical loopback of a detection apparatus according to this application;

FIG. 9 is a diagram of a detection apparatus according to this application;

FIG. 10a is a diagram of a structure of an optical fiber;

FIG. 10b is a diagram of a structure of an optical fiber;

FIG. 11 is a diagram of a detection apparatus according to this application;

FIG. 12a is a diagram of a fastening module according to this application; and

FIG. 12b is a diagram of a fastening module according to this application.

## DESCRIPTION OF EMBODIMENTS

To make objectives, technical solutions, and advantages of embodiments of this application clearer, the following further describes embodiments of this application in detail with reference to the accompanying drawings.

For ease of understanding, some concepts related to embodiments of this application are described for reference by using examples below. Details are as follows.

### 1. Detection apparatus

The detection apparatus mentioned in embodiments of this application may be a lidar, or may be another optical detection apparatus, for example, an integrated detection apparatus (for example, a detection apparatus that integrates a radar detector and an image sensor). An operating principle of the detection apparatus is to detect a corresponding detection area by emitting an optical signal and receiving a returned light signal.

The detection apparatus in embodiments of this application can be used in various fields such as the fields of intelligent driving, intelligent transportation, intelligent manufacturing, environment detection, surveying and mapping, and uncrewed aerial vehicles, and can implement one or more functions of target detection, distance measurement, speed measurement, target tracking, imaging recognition, and the like.

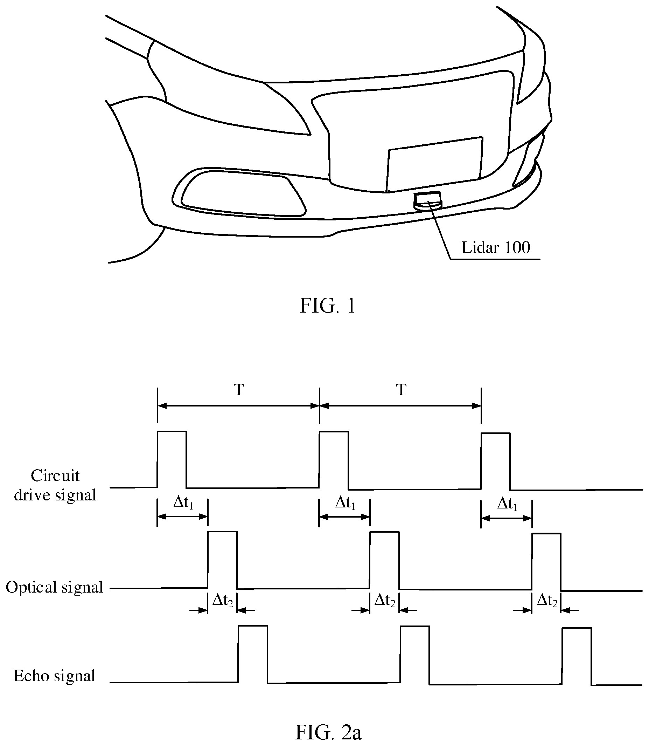

The detection apparatus in embodiments of this application may be used in an in-vehicle detection apparatus (for example, a lidar 100 in FIG. 1), a roadside detection apparatus (for example, an intersection radar), or the like, or may be used in another detection apparatus, for example, a detection apparatus installed on an apparatus like an uncrewed aerial vehicle, a robot, a rail vehicle, a bicycle, a signal light, a speed measurement apparatus, or a base station. An installation position of the detection apparatus is not limited in this application.

### 2. Optical fiber

An optical fiber (Optical fiber), also referred to as an optical fiber, is a fiber made of glass or plastic, and a light transmission tool that uses a total reflection principle of light in the fiber to transmit light. Generally, a fiber core of the optical fiber is glass with a high refractive index, and a cladding part is glass or plastic with a low refractive index. Light is transmitted in the fiber core, and is continuously totally reflected at junctions of the cladding.

### 3. Optical loopback

An optical path that is from an emission module to a receiving module and that is constructed to correct a delay between an electrical drive signal and a corresponding optical signal is referred to as an optical loopback.

### 4. Time of flight

A time of flight (Time of Flight, ToF) is a time required for a laser emitter to send a light pulse to a target object and then a detector to receive light reflected from the target. A distance between a target object and a detection apparatus can be obtained based on the speed of light and a ToF. A ToF measurement technology may include a single laser pulse technology, a multi-laser pulse technology, and the like. In the single laser pulse technology, a measured time of flight is a time of returning of a single pulse, and has a high requirement on a signal-to-noise ratio (signal noise ratio, SNR, or referred to as S/N). In the multi-laser pulse technology, times of returning of a plurality of pulses are measured each time, and detection data is obtained through a photon count histogram.

### 5. Dispensing

Dispensing (also referred to as adhesion, bonding, gluing, or cementing) means a technology in which surfaces of homogeneous or heterogeneous objects are connected together by using an adhesive. The adhesive is a kind of natural or synthetic, and organic or inorganic substance that can enable, through functions such as adhesion and cohesion of an interface, two or more components or materials to be connected together, is also referred to as cement, and is also briefly referred to as glue in daily life.

Optionally, a gluing manner may be implemented by using an optically clear adhesive (optically clear adhesive, OCA).

In a possible design, the gluing manner includes the following manner: applying pressure to enable surfaces of two optical parts to be attached together. In this case, the surfaces of the two attached optical parts are usually clean and smooth, and have consistent surface shapes. In some scenarios, this manner is also referred to as optical contact bonding.

### 6. Adaptation

A process in which signals emitted or received by different elements are processed or preprocessed so that the two elements can work together is referred to as adaptation. For example, if an emission power of an emission module is high and a receiving power of a receiving module is low, a signal emitted by the emission module needs to be attenuated and then is transmitted to the receiving module. For another example, if an emission power of an emission module is low, a signal needs to be amplified and then is transmitted to a receiving module.

In embodiments of this application, unless otherwise specified, a quantity of nouns indicates "a singular noun or a plural noun", that is, "one or more". "At least one" means one or more, and "a plurality of" means two or more. A term "and/or" describes an association relationship between associated objects and indicates that there may be three relationships. For example, A and/or B may represent the following three cases: Only A exists, both A and B exist, and only B exists, where A and B may be singular or plural. Unless otherwise specified, the character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

Ordinal numerals such as "first" and "second" in embodiments of this application are used to distinguish between a plurality of objects, and are not intended to limit a size, content, a sequence, a time sequence, an application scenario, priorities, or importance of the plurality of objects.

In embodiments of this application, "connection" may be a direct connection or an indirect connection. In addition, "connection" may be an electrical connection or a communication connection. For example, that two electrical elements A and B are connected may mean that A and B are directly connected, or may mean that A and B are indirectly connected through another electrical element or a connection medium, so that an electrical signal can be transmitted between A and B. For another example, that two devices A and B are connected may mean that A and B are directly connected, or may mean that A and B are indirectly connected through another communication device or a communication medium, provided that A and B can communicate with each other.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing describes some concepts in embodiments of this application, and the following describes technical features in embodiments of this application.

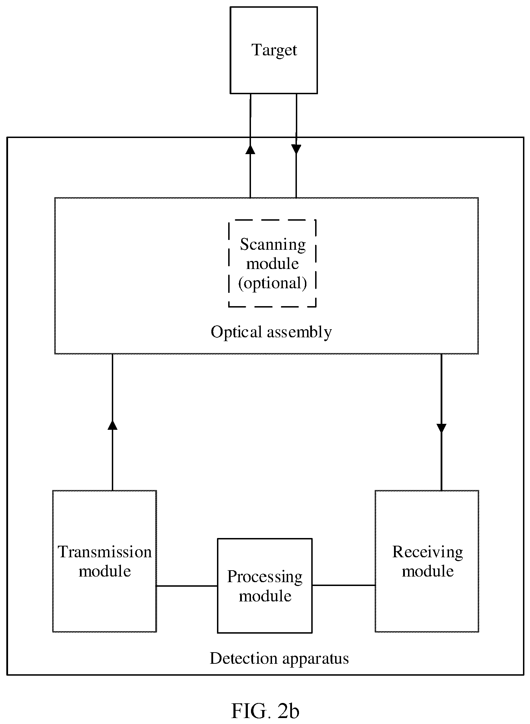

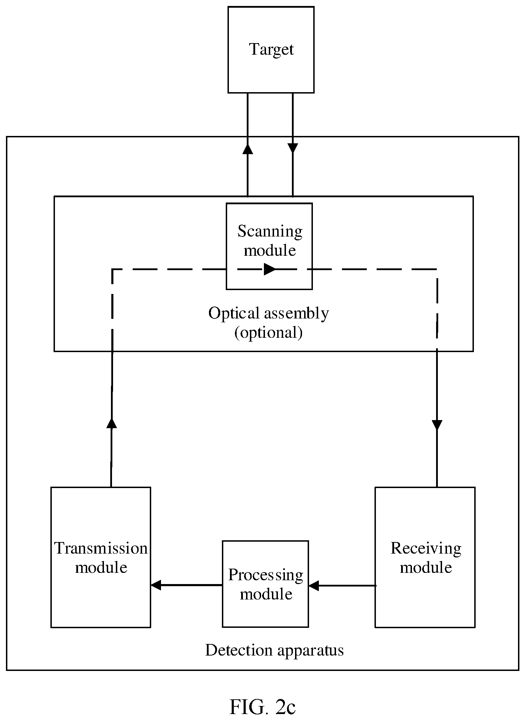

Refer to FIG. 2a, FIG. 2b, and FIG. 2c. FIG. 2a is a diagram of receiving and sending time sequences of a detection apparatus, and FIG. 2b and FIG. 2c each are a diagram of a principle of a detection apparatus. A time sequence interval of a circuit drive signal is T. After the circuit drive signal is emitted, the circuit drive signal drives an emission module to emit light. There is a delay $\Delta t1$ from emitting of the circuit drive signal to emitting of an optical signal by the emission module. After being reflected by a target object, the optical signal emitted by the emission module enters the receiving module, and an echo signal is generated. A time from emitting of the optical signal by the emission module to generation of the echo signal by the receiving module is $\Delta t2$. A time of flight is counted from a moment at which the circuit drive signal is emitted to a moment at which the echo signal is obtained. A distance L may be calculated according to the following formula:

$$L=c\times(\Delta t1+\Delta t2-\Delta t1')/2$$

$\Delta t1'$ is a calibration value of a detection apparatus, and c is the speed of light. It is assumed that $\Delta t1'=\Delta t1$. When actual $\Delta t1$ changes due to external temperature changes or system aging, a value of $\Delta t1$ changes, and $\Delta t1'$ is still the calibration value. Therefore, distance measurement accuracy is reduced.

In view of this, this application provides a detection apparatus, and the detection apparatus can construct a stable optical loopback based on an optical fiber, and measure an accurate delay $\Delta t1$ by using the optical loopback, to provide $\Delta t1'$ measured in real time to correct a value of the delay, thereby improving detection accuracy. Because the optical fiber is flexibly routed and selected, an emission module and a receiving module can be adapted by adjusting a position and an angle of a receiving end of the optical fiber, a model of the optical fiber, and a position of an emergent end of the optical fiber, to reduce a selection difficulty; and an optical path is constructed by using the optical fiber, to save internal space of the apparatus.

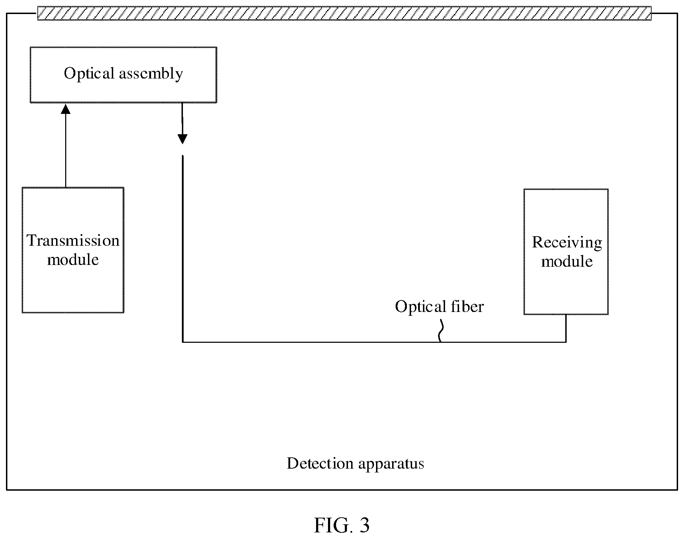

FIG. 3 is a diagram of a detection apparatus according to this application. The detection apparatus includes an emission module, a receiving module, an optical fiber, and an optical assembly. The emission module emits a first light beam. As shown by an arrow line in FIG. 3, the optical assembly transmits the first light beam to the optical fiber, the optical fiber transmits the first light beam to the receiving module, and the receiving module receives the first light beam. An optical path from the emission module to the receiving module is constructed by using the optical fiber, and may be used to calculate a delay, namely, $\Delta t1$, from generation of a circuit drive signal to generation of an optical signal. The loopback is inside the detection apparatus, and therefore $\Delta t2$ of the loopback may be ignored. Inside the detection apparatus, a value of $\Delta t1$ may be measured through the loopback optical path, to correct an error caused by factors such as an environment change and/or device aging. When an external target is detected, a more accurate detection result can be obtained. Because the optical fiber is flexibly routed and selected, the emission module and the receiving module can be adapted by adjusting a position and an angle of a receiving end of the optical fiber, a model of the optical fiber, and a position of an emergent end of the optical fiber, to reduce a selection difficulty; and the optical path is constructed by using the optical fiber, to save internal space of the apparatus.

The following describes the used specific modules.

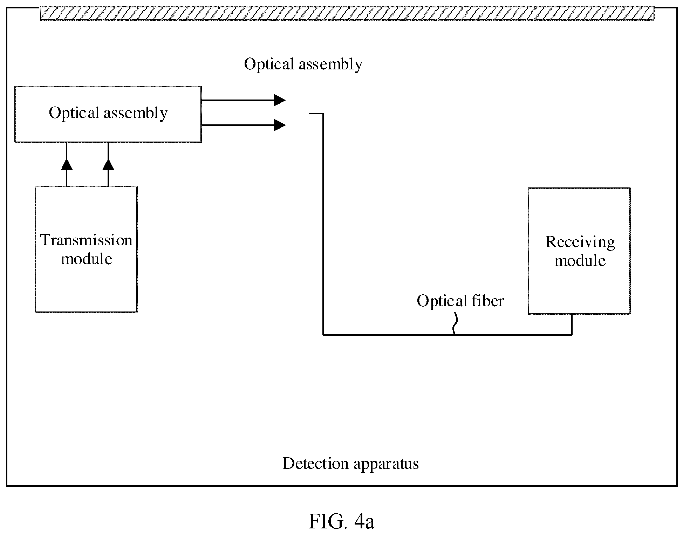

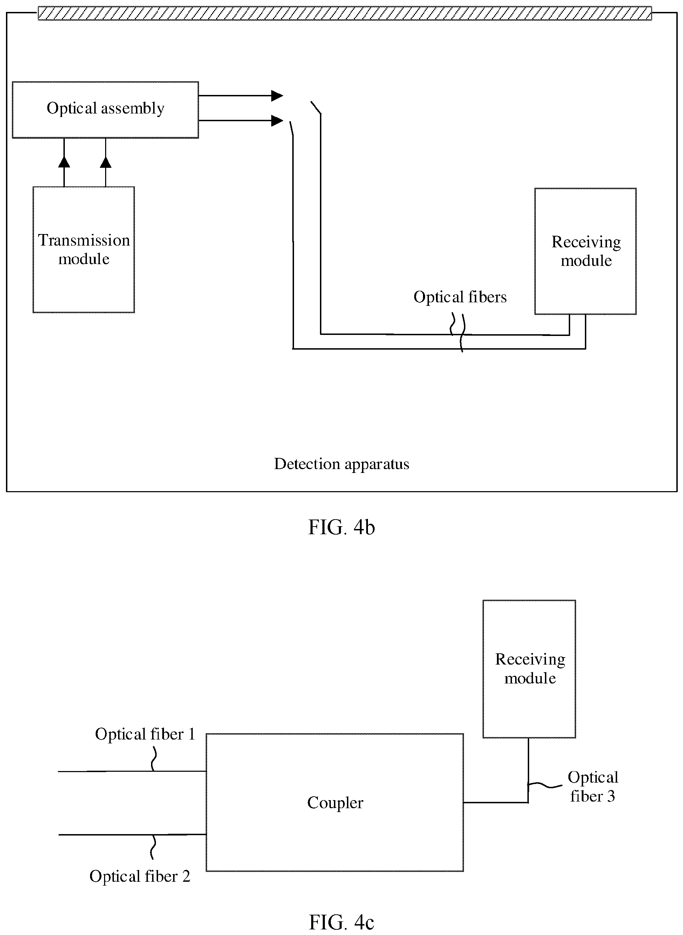

The emission module includes a light emitting element, configured to convert an electrical signal into an optical signal. The emission module may include one or more light emitting elements, and the light emitting element may be a laser. For example, the emission module may include one or more of the following lasers: a semiconductor laser, an optical fiber laser, a gas laser, or the like. The semiconductor laser may specifically include a laser diode (laser diode, LD), a vertical cavity surface emitting laser (Vertical Cavity Surface Emitting Laser, VCSEL), an edge-emitting laser (edge-emitting laser, EEL), a distributed feedback laser (distributed feedback LD, DFB-LD), a distributed Bragg reflection laser (distributed bragg reflection LD, DBR-LD), a grating coupled sampling reflection laser (Grating coupled sampling reflection LD, GCSR-LD), a micro opto electro mechanical system laser (micro optical electro mechanical system LD, MOEMS-LD), and other light emitting elements. The emission module in embodiments of this application is a logical concept, and a combination of function components for emitting an optical signal is referred to as the emission module. A form and an implementation form of the emission module are not limited in this application. In a possible implementation, the emission module may include a plurality of light sources, as shown in FIG. 4a and FIG. 4b. When the emission module includes two or more light emitting elements, emitted light beams may be transmitted into a same optical fiber through the optical assembly and transmitted to the receiving module to implement an optical loopback, as shown in FIG. 4a, or may be transmitted through different optical fibers, as shown in FIG. 4b.

The plurality of light emitting elements included in the emission module may be more widely adapted to different application scenarios. For example, a light emitting element with a low power is used for detecting a near area, and a light emitting element with a high power is used for detecting a far area. A plurality of optical fibers can be used to adapt to different light sources and receiving modules, reducing a component selection difficulty and reducing production costs and dependency on component supply. In a possible implementation, as shown in FIG. 4c, the detection apparatus further includes a coupler, where the coupler is configured to couple a plurality of optical fibers into one optical fiber, to transmit the first light beam to the receiving module.

The coupler couples the plurality of optical fibers into one optical fiber, to transmit the first light beam to the receiving module. This can reduce a difficulty in assembling the optical fiber on a receiving module side, reduce production costs, and save internal space of the detection apparatus.

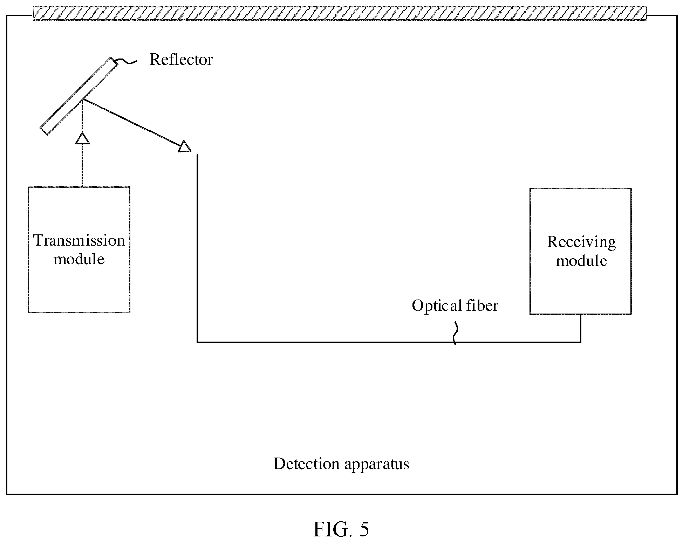

The optical assembly changes a propagation path of a light beam by reflecting or refracting the light beam or in another manner, so that the light beam is propagated according to a required path. The optical assembly may include one or more optical elements, for example, a window, a reflector, a lens, a polarizer, a filter, or a light homogenizer. Optionally, the optical assembly includes at least one reflector, as shown in FIG. 5. For the detection apparatus in embodiments of this application, a quantity, placement positions, a placement sequence, sizes, and the like of the optical elements in the detection apparatus are not specifically limited.

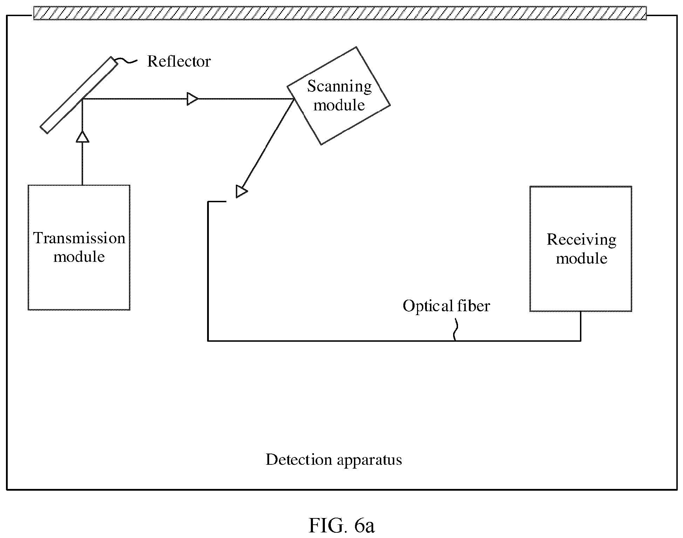

In a possible implementation, as shown in FIG. 6a, the optical assembly further includes a scanning module, a first scanning angle of the scanning module is used for the first light beam to be transmitted to the optical fiber, and the first scanning angle of the scanning module is an angle at which the detection apparatus does not detect an external target. When the detection apparatus detects a target, the scanning module is configured to reflect a light beam to the outside of the window. When the scanning module is configured to construct an optical loopback, the scanning module reflects a light beam to the optical fiber, where the scanning angle is an angle at which the detection apparatus does not detect an external target.

The scanning module is configured to change a propagation direction of light. For example, the scanning module may change a propagation direction of an optical signal from a light source, and/or the scanning module may change a propagation direction of an optical signal from an object in a field of view.

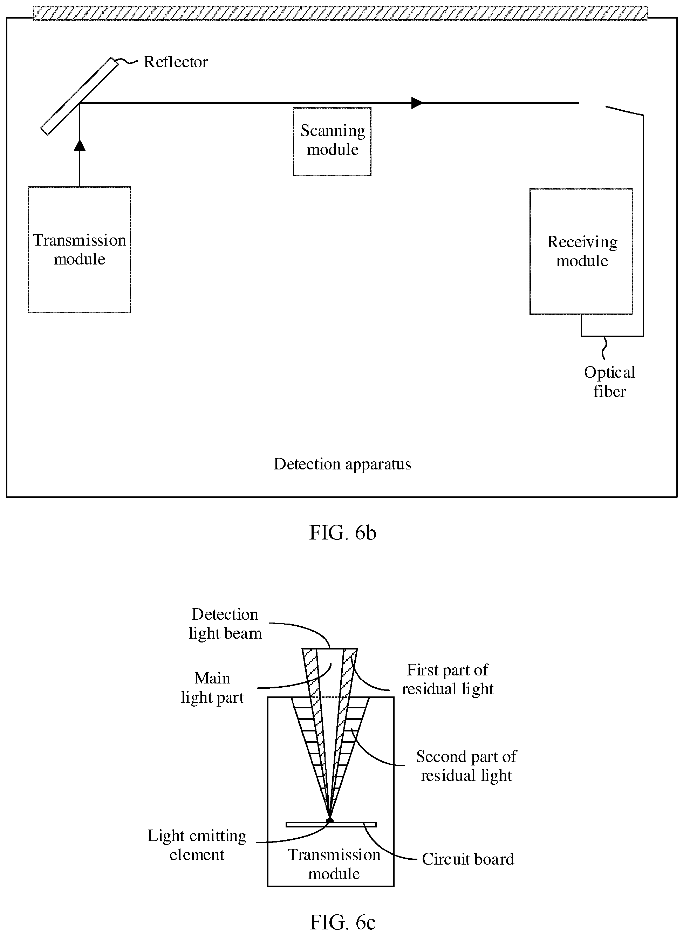

Optionally, as shown in FIG. 6b, the first light beam is transmitted from the emission module to the optical fiber without passing through the scanning module. In this case, an angle of the scanning module is the first scanning angle. The first scanning angle does not necessarily cause the first light beam to be reflected by the scanning module.

In a possible implementation, as shown in FIG. 6c, the emission module includes a circuit board configured to control a light emitting element. One or more light emitting elements may be disposed on the circuit board. The one or more light emitting elements are configured to emit a detection light beam. A part of the detection light beam is emitted out of the emission module, and the other part of the detection light beam is not emitted out of the emission module. The detection light beam includes a main light part and a residual light part. The main light part is used to detect an external target. Based on whether the residual light part is emitted out of the emission module, the residual light part may be further divided into a first part of residual light and a second part of residual light. The first part of residual light is residual light emitted out of the emission module, and the second part of residual light is residual light that is not emitted out of the emission module. Therefore, based on the two types of residual light, this embodiment of this application further provides the following detection apparatus.

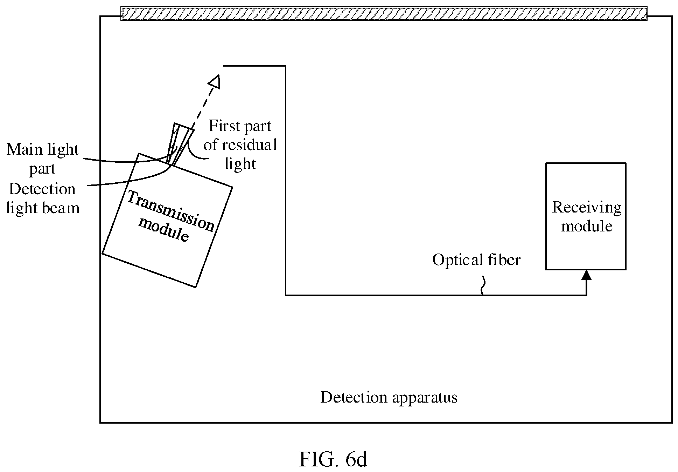

Optionally, as shown in FIG. 6d, the detection apparatus may include an emission module, a receiving module, and an optical fiber. The emission module is configured to emit a detection light beam, where the detection light beam includes a main light part and a residual light part, the main light part of the detection light beam is used to detect an external target, and a first part of residual light in the residual light part of the detection light beam is transmitted to the optical fiber. An incident end of the optical fiber is located outside the emission module, and the optical fiber is configured to transmit the first part of residual light to the receiving module. The receiving module is configured to receive the first part of residual light. A light beam emission angle of the emission module is used for the first part of residual light to be transmitted to the optical fiber, that is, the emission module may adjust the light beam emission angle, so that the first part of residual light can be transmitted into the optical fiber. For the main light part of the detection light beam, the emission module may also adjust the light beam emission angle, to reflect the main light part of the detection light beam to the outside of a window.

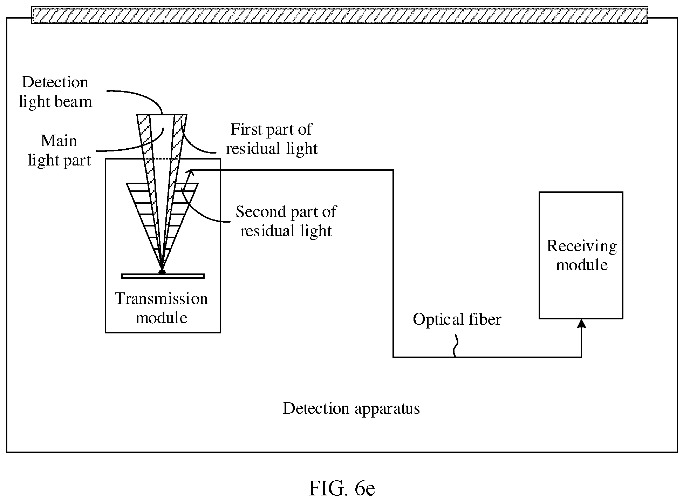

Optionally, as shown in FIG. 6e, the detection apparatus may include an emission module, a receiving module, and an optical fiber. The emission module is configured to emit a detection light beam, where the detection light beam includes a main light part and a residual light part, the main light part of the detection light beam is used to detect an external target, and a second part of residual light in the residual light part of the detection light beam is transmitted to the optical fiber. An incident end of the optical fiber is located inside the emission module, and the optical fiber is configured to transmit the second part of residual light to the receiving module. The receiving module is configured to receive the second part of residual light. A light beam emission angle of the emission module is used for the second part of residual light to be transmitted to the optical fiber, that is, the emission module may adjust the light beam emission angle, so that the second part of residual light can be transmitted into the optical fiber. For the main light part of the detection light beam, the emission module may also adjust the light beam emission angle, to reflect the main light part of the detection light beam to the outside of a window.

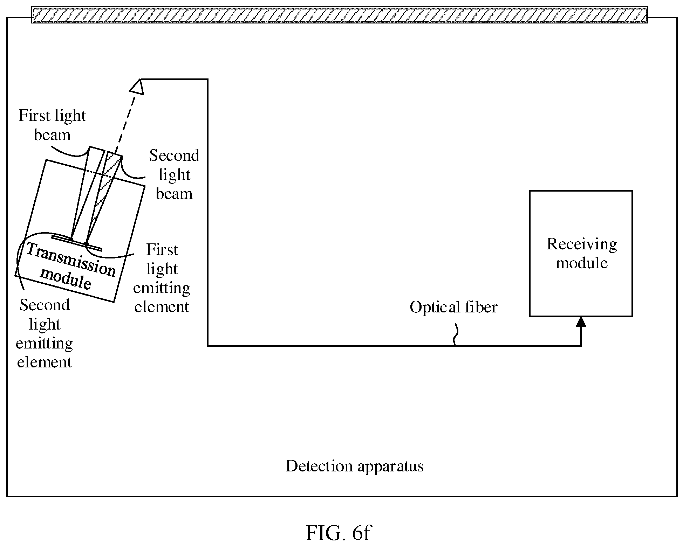

Optionally, as shown in FIG. 6f, the detection apparatus may include an emission module, a receiving module, and an optical fiber. The emission module includes a circuit board configured to control a light emitting element. A plurality of light emitting elements may be disposed on the circuit board. The plurality of light emitting elements include a first light emitting element. The first light emitting element is configured to: emit a second light beam, and transmit the second light beam to the optical fiber. The second light beam is emitted out of the emission module. An incident end of the optical fiber is located outside the emission module, and the optical fiber is configured to transmit the second light beam to the receiving module. The receiving module is configured to receive the second light beam. A first emission angle of the first light emitting element is used for the second light beam to be transmitted to the optical fiber, that is, the first light emitting element may adjust the first emission angle, so that the second light beam can be transmitted into the optical fiber.

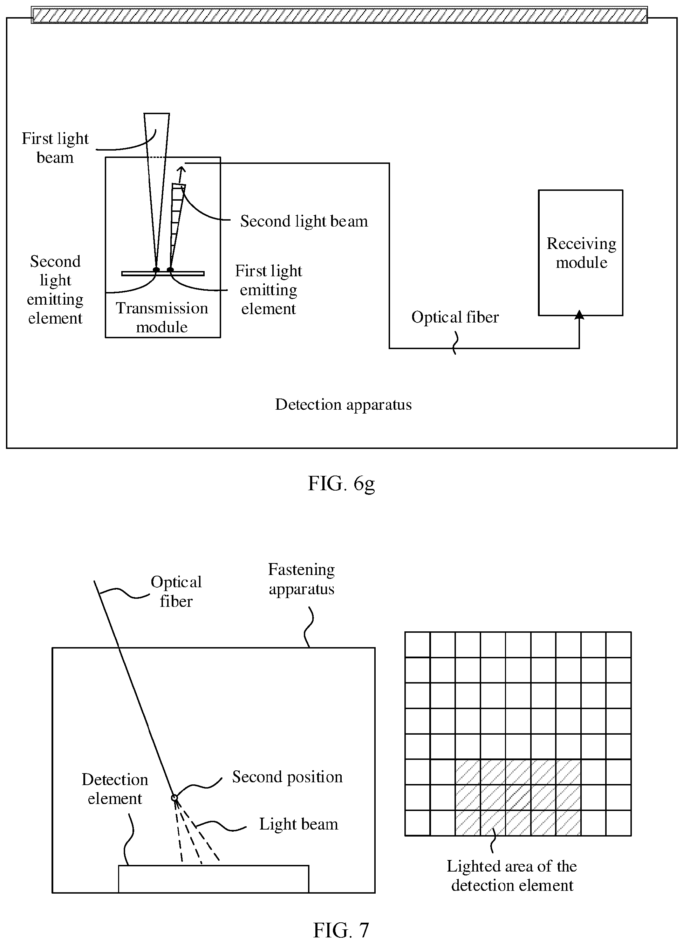

Optionally, as shown in FIG. 6g, the detection apparatus may include an emission module, a receiving module, and an optical fiber. The emission module includes a circuit board configured to control a light emitting element. A plurality of light emitting elements may be disposed on the circuit board. The plurality of light emitting elements include a first light emitting element. The first light emitting element is configured to: emit a second light beam, and transmit the second light beam to the optical fiber. An incident end of the optical fiber is located inside the emission module, and the optical fiber is configured to transmit the second light beam to the receiving module. The receiving module is configured to receive the second light beam. It can be learned that the second light beam is not emitted out of the emission module by the first light emitting element, but is left inside the emission module to be received by the optical fiber. A first emission angle of the first light emitting element is used for the second light beam to be transmitted to the optical fiber, that is, the first light emitting element may adjust the first emission angle, so that the second light beam can be transmitted into the optical fiber.

In addition, for the detection apparatuses shown in FIG. 6f and FIG. 6g, the plurality of light emitting elements of the emission module further include a second light emitting element. The second light emitting element is configured to emit a first light beam out of the emission module, and the first light beam is configured to detect an external target. The second light emitting element may alternatively adjust a second emission angle, to emit the first light beam out of a window.

In this embodiment of this application, the scanning module includes at least one reflective surface. By changing an angle of the reflective surface, an optical signal from a light source may be illuminated to different positions in a field of view, so as to complete detection of a detection area and/or construction of an optical path inside the detection apparatus. A scanning process is implemented based on the scanning module. A movement manner of the scanning module may be rotation, swing, electrical control, or the like.

Optionally, the scanning module may be a polyhedron rotating mirror, a prism, a reflector group, a lens, or a lens group.

When the detection apparatus detects a target, when the emission module emits an optical signal to the target, an angle at which the scanning module is located is a working angle; when the optical signal emitted by the emission module does not pass through an external target, an angle at which the scanning module is located is a non-working angle; or when the optical signal emitted by the emission module passes through the optical assembly and does not pass through the external target, is transmitted to the optical fiber through the optical assembly, and is finally transmitted to the receiving module, an angle at which the scanning module is located is the first scanning angle. In a process of running of the detection apparatus, the first scanning angle may be one or more fixed angles or ranges. A quantity and a range of the first scanning angles are not limited in this application.

The receiving module is configured to receive an optical signal. Further, the receiving module may obtain an electrical signal based on the optical signal. Optionally, the electrical signal may be output as an echo signal, or an echo signal obtained after the electrical signal is processed is output.

Optionally, the receiving module may include one or more detection elements. For example, the receiving module may include one or more of the following detection elements: at least one detection element of a single-photon avalanche diode (single-photon avalanche diode, SPAD), a silicon photomultiplier (Silicon photomultiplier, SiPM), a semiconductor avalanche photodiode (avalanche photo detector, APD), a multi-pixel photon counter (multi-pixel photon counter, MPPC), an electron multiplying charge-coupled device (electron multiplying charge-coupled device, EMCCD), or the like.

Further, when the receiving module includes a plurality of detection elements, the plurality of detection elements may be arranged in an array. For example, the array may be an array of a specification like a $1 \times 2$ array, a $2 \times 3$ array, or a $3 \times 3$ array. A quantity of rows and a quantity of columns arranged in the array are not limited in this application. Optionally, when the receiving module includes a plurality of detection elements, and the receiving module works, a case in which only a part of detection elements are in a working state may occur, and in this case, the other detection elements are in a non-working state (for example, a reserved state).

In the receiving process, an optical signal may optionally pass through one or more optical elements. Optionally, when an electrical signal is obtained based on an optical signal, the detection element in the receiving module may convert the optical signal into the electrical signal, or a conversion unit other than the detection element in the receiving module may convert the optical signal into the electrical signal. This is not specifically limited herein. It should be understood that quantities and installation positions of the emission module, the receiving module, the optical element, and the like are not limited in this embodiment of this application.

In a possible implementation, as shown in FIG. 7, the receiving module includes a detection element and a fastening apparatus. The fastening apparatus fastens an emergent end of the optical fiber at a second position, the fastening apparatus is provided with a through hole, the optical fiber transmits the first light beam to the detection element through the through hole, and an energy loss value of the first light beam is related to the second position.

As shown in FIG. 7, a position of the emergent end of the optical fiber is the second position. The second position affects an optical power received by the receiving module. When the second position is closer to the detection apparatus, an optical power received by the detection apparatus is larger, and therefore affects the loss value of the first light beam. Therefore, an emitting optical power of the first light beam may adapt to a receiving power range of the receiving module by adjusting the second position and an insertion depth.

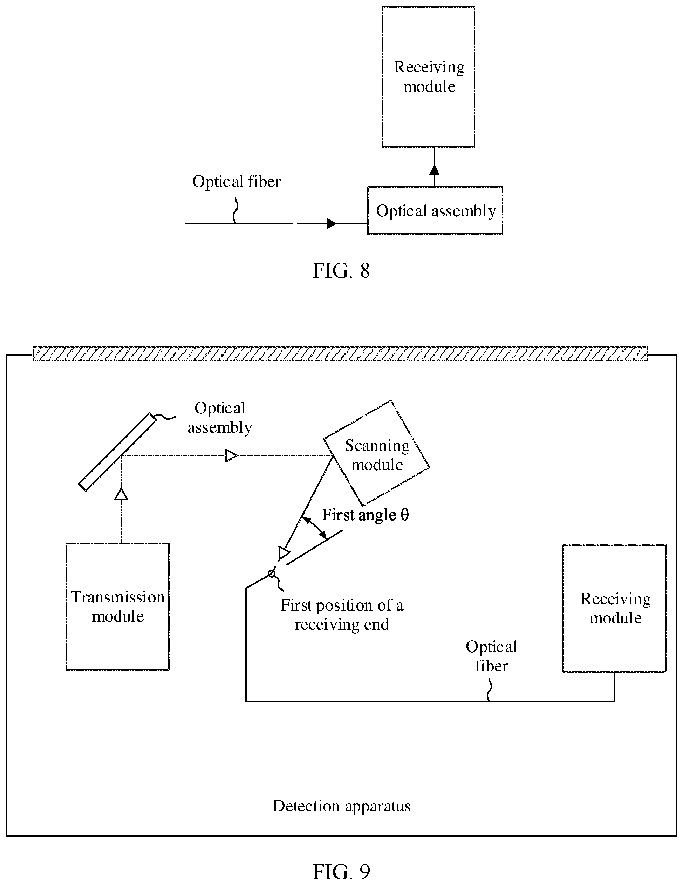

Optionally, as shown in FIG. 8, the emergent end of the optical fiber may not be directly aligned with the detection element of the receiving module. An optical power and an optical path of light emergent from the optical fiber may be further adjusted by the optical assembly, and then the light is transmitted to the detection element. For example, after the light is reflected by a reflector, the optical power is in a required range. For example, an optical power and an optical path of the first light beam are changed by using a prism or another lens group, and the first light beam is finally transmitted to the detection element. A form and a quantity of the optical assemblies are not limited in this application.

In a possible implementation, the energy loss value of the first light beam is greater than a first threshold and less than a second threshold, and a range of the energy loss value of the first light beam is related to an emission power range of the emission module and a receiving power range of the receiving module. The emission module and the receiving module have respective emitting and receiving power ranges. For an optical path constructed by using the optical fiber, an optical fiber arrangement manner, an optical fiber parameter, and an optical assembly arrangement manner may be adjusted, so that the emission module and the receiving module can adapt to each other and work normally. The optical fiber is flexibly arranged, and may be arranged inside or outside the detection apparatus according to a requirement, so that a complex optical path structure design can be omitted, the apparatus is simplified, and a size of the apparatus is reduced, and a process difficulty and production costs are reduced.

In a possible implementation, a receiving end of the optical fiber is fastened at a first position, an angle at which the first light beam is incident to the optical fiber is a first angle $\theta$, and an energy loss value of the first light beam is related to at least one of the first position and the first angle $\theta$.

Refer to FIG. 9. Both the first position of the receiving end of the optical fiber and the first angle θ at which the first light beam is incident to the optical fiber may affect the energy loss value of the first light beam by affecting a magnitude of energy input to the optical fiber. The first position and the first angle may be selected based on an emission power range of the emission module and a receiving power range of the receiving module. Different energy loss values of the first light beam may be generated based on selection of different first positions and first angles, so that a requirement for a larger working range of the emission module and the receiving module can be met, and a selection difficulty is reduced.

In a possible implementation, a value of an optical fiber span energy loss of the first light beam is β, where β satisfies the following formula:

$$\beta = 10 \times \log(P\_in/P\_out)$$

P_in is a magnitude of input energy of the optical fiber, and P_out is a magnitude of output energy of the optical fiber.

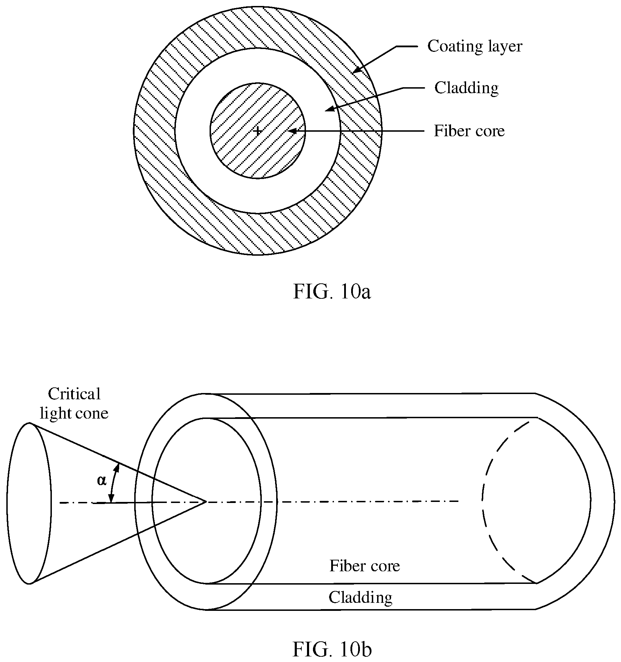

In a possible implementation, the energy loss value of the first light beam is related to an optical fiber parameter, and the optical fiber parameter includes a core diameter of the optical fiber and a numerical aperture of the optical fiber. The core diameter of the optical fiber is a diameter of a fiber core. Generally, a larger core diameter of the optical fiber indicates a better light concentration effect, which is more conducive to long-distance transmission. Not all light incident to an end face of the optical fiber can be transmitted by the optical fiber. Only incident light within a specific angle range can be transmitted by the optical fiber. A sine value of the angle α is referred to as the numerical aperture of the optical fiber. As shown in FIG. 10b, only light that is incident within a critical light cone can be transmitted by the optical fiber.

The core diameter and the numerical aperture of the optical fiber affect a light flux and an emergent light effect of the optical fiber. FIG. 10a is a diagram of a structure of the optical fiber. A larger core diameter of the optical fiber indicates a larger light flux. The loss value of the first light beam may be affected by affecting a power of incident light. At the emergent end, a larger core diameter of the optical fiber causes lower concentration of an emergent light beam, and this affects a power of light received by the receiving module. Therefore, the loss value of the first light beam may be adjusted by selecting optical fibers of different models, to match the emission module and the receiving module.

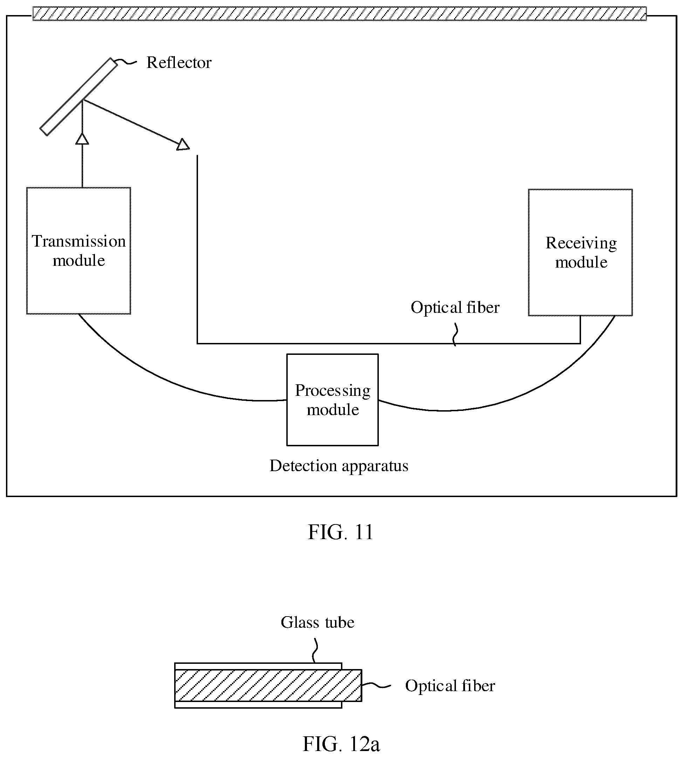

In a possible implementation, the detection apparatus further includes a processing module. Refer to FIG. 11. The processing module is connected to the emission module and the receiving module. The processing module is configured to obtain a first electrical signal, where the first electrical signal is used to cause the emission module to emit the first light beam; the processing module is further configured to obtain a second electrical signal, where the second electrical signal corresponds to the first light beam received by the receiving module. The processing module is configured to calculate a time difference between the first electrical signal and the second electrical signal, where the time difference is used to offset, during calculation of a detection distance, a delay Δt1 from emitting of a circuit drive signal to emitting of an optical signal by the light emitting element, thereby improving detection accuracy.

The processing module is configured to process output data (for example, an electrical signal or an echo signal) obtained by the detection apparatus, or the processing module may be further configured to control a component in the detection apparatus.

The processing module may include one or more processors. It should be understood that, in this embodiment of this application, for ease of describing a calculation function, the processor is described. In a specific implementation process, the processor may include an apparatus having a calculation function. For example, the at least one processor may include one or more of the following apparatuses: a central processing unit (central processing unit, CPU), an application processor (application processor, AP), a time-to-digital converter (Time-to-Digital Converter, TDC), a filter, a graphics processing unit (graphics processing unit, GPU), a microprocessor (microprocessor unit, MPU), an application specific integrated circuit (Application Specific Integrated Circuit, ASIC), an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit in completing corresponding processing and application), a microcontroller unit (Microcontroller Unit, MCU), a neural-network processing unit (neural-network processing unit, NPU), and/or the like.

Optionally, the processing module may be located inside the detection apparatus, or may be located outside the detection apparatus.

Alternatively, in some designs, the processing module may include a plurality of components, a part of the components are located inside the detection apparatus, and the other part of the components are located outside the detection apparatus. For example, the processing module may include a digital-to-analog conversion module, a filtering module, a TOF resolving module, and a point cloud generation module. The digital-to-analog conversion module, the filtering module, and the TOF resolving module are located inside the detection apparatus, and the point cloud generation module is located outside the detection apparatus.

In a possible implementation, the detection apparatus further includes an optical fiber fastening module, and the optical fiber fastening module is a glass tube or an optical fiber clamp. As shown in FIG. 12a, the optical fiber is sleeved in the glass tube and is fastened through glue dispensing, the glass tube may be clamped at a groove of the emission module, and a joint may be fastened through glue dispensing.

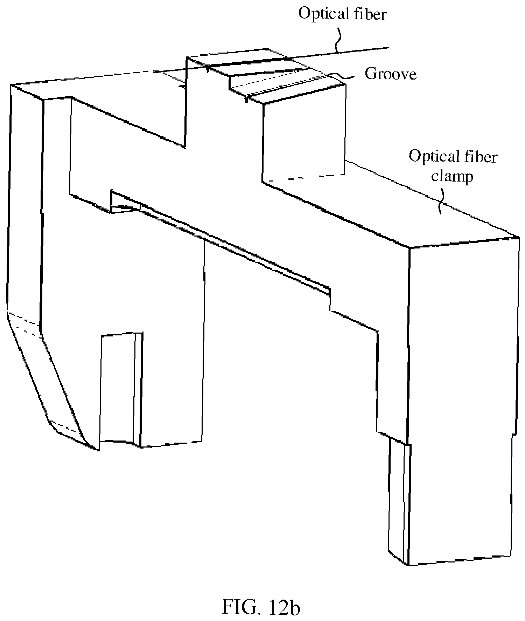

Optionally, the fastening module is an optical fiber clamp, as shown in FIG. 12b. The optical fiber clamp is provided with a groove, the groove is used to clamp the optical fiber, and an angle of the groove may be determined based on a required first angle. Optionally, the optical fiber clamp is fastened to a side wall of a lens tube of the emission module.

The fastening module fastens the optical fiber to a corresponding position and angle as required, to ensure stability of the optical loopback, and therefore improve detection accuracy of the detection apparatus.

This application further provides an optical loopback method, applied to a detection apparatus. Refer to FIG. 3. The detection apparatus includes an emission module, a receiving module, an optical fiber, and an optical assembly. The method includes: The emission module of the detection apparatus emits a first light beam; the optical assembly transmits the first light beam to the optical fiber; the optical fiber transmits the first light beam to the receiving module; and the receiving module receives the first light beam. An optical loopback optical path of the detection apparatus is constructed in this method, so that an optical loopback is stable and reliable, and distance measurement accuracy of the detection apparatus can be improved. In addition, the optical fiber is flexibly routed, and the emission module and the receiving module can be flexibly adapted, to reduce a component selection difficulty.

In a possible implementation, the detection apparatus further includes a processing module, and the method further includes: The processing module obtains a first electrical signal, where the first electrical signal is used to cause the emission module to emit the first light beam; the processing module receives a second electrical signal, where the second electrical signal corresponds to the first light beam received by the receiving module; and the processing module calculates a time difference between the first electrical signal and the second electrical signal.

In a possible implementation, the optical assembly includes a scanning module; and the scanning module transmits the first light beam to the optical fiber at a first scanning angle, where the first scanning angle of the scanning module is an angle at which the detection apparatus does not detect an external target.

In a possible implementation, a value of an optical fiber span energy loss of the first light beam is β, where β satisfies the following formula:

$$\beta=10\times\log(P\_in/P\_out)$$

P_in is a magnitude of input energy of the optical fiber, and P_out is a magnitude of output energy of the optical fiber.

In a possible implementation, a receiving end of the optical fiber is fastened at a first position, an angle at which the first light beam is incident to the optical fiber is a first angle θ, and an energy loss value of the first light beam is related to at least one of the first position and the first angle θ.

In a possible implementation, the receiving module includes a detection element and a fastening apparatus, the fastening apparatus is provided with a through hole, an emergent end of the optical fiber is fastened at a second position, and the first optical fiber is transmitted to the detection element through the through hole, where an energy loss value of the first light beam is related to the second position.

In a possible implementation, the energy loss value of the first light beam is related to an optical fiber parameter, and the optical fiber parameter includes a core diameter of the optical fiber and a numerical aperture of the optical fiber.

In a possible implementation, the emission module includes one or more light emitting elements.

In a possible implementation, the apparatus further includes a coupler, where the coupler couples a plurality of optical fibers into one optical fiber, to transmit the first light beam to the receiving module.

In a possible implementation, the apparatus further includes an optical fiber fastening module, where the optical fiber fastening module fastens the optical fiber. The optical fiber fastening module is a glass tube or an optical fiber clamp, the optical fiber clamp is provided with a groove, and the first angle θ is related to an angle of the groove.

This application further provides another optical loopback method, applied to a detection apparatus. FIG. 6e and FIG. 6d each are still another diagram of a detection apparatus according to this application. The detection apparatus includes an emission module, a receiving module, and an optical fiber. The method includes: The emission module emits a detection light beam, where the detection light beam includes a main light part and a residual light part, the main light part of the detection light beam is used to detect an external target, and the residual light part of the detection light beam is transmitted to the optical fiber; the optical fiber transmits the residual light part of the detection light beam to the receiving module; and the receiving module receives the residual light part of the detection light beam. An optical loopback optical path of the detection apparatus is constructed in this method, so that an optical loopback is stable and reliable, and distance measurement accuracy of the detection apparatus can be improved. In addition, the optical fiber is flexibly routed, and the emission module and the receiving module can be flexibly adapted, to reduce a component selection difficulty.

In a possible implementation, the detection apparatus further includes a processing module, and the method further includes: The processing module is configured to obtain a first electrical signal, where the first electrical signal is used to cause the emission module to emit the detection light beam; the processing module is configured to receive a second electrical signal, where the second electrical signal corresponds to the residual light part that is of the detection light beam and that is received by the receiving module; and the processing module is configured to calculate a time difference between the first electrical signal and the second electrical signal. Optionally, the emission module transmits the residual light part of the detection light beam to the optical fiber at a light beam emission angle.

Optionally, the residual light part of the detection light beam includes a first part of residual light, the first part of residual light is emitted out of the emission module, an incident end of the optical fiber is located outside the emission module, and the optical fiber receives the first part of residual light, and transmits the first part of residual light to the receiving module; and the receiving module receives the first part of residual light.

Optionally, the residual light part of the detection light beam includes a second part of residual light, the second part of residual light is not emitted out of the emission module, and an incident end of the optical fiber is located inside the emission module; the emission module includes one or more light emitting elements, and the optical fiber receives the second part of residual light from the light emitting element, and transmits the second part of residual light to the receiving module; and the receiving module receives the second part of residual light.

An embodiment of this application further provides a terminal. The terminal includes at least one detection apparatus mentioned in the foregoing embodiments of this application. The at least one detection apparatus in the terminal may be integrated into an entire system or device, or the at least one detection apparatus in the system may be independently disposed as an element or an apparatus. The terminal may be a vehicle, an uncrewed aerial vehicle, or a robot.

For technical effects of the foregoing detection method and terminal, refer to descriptions of corresponding apparatus implementations. Details are not described herein again.

The foregoing descriptions about implementations allow a person skilled in the art to clearly understand that for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, the module or division into the units is merely logical function division and may be other division in actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

The foregoing descriptions are merely specific implementations of embodiments of this application, but are not intended to limit the protection scope of embodiments of this application. Any variation or replacement within the technical scope disclosed in this application shall fall within the protection scope of embodiments of this application. Therefore, the protection scope of embodiments of this application shall be subject to the protection scope of the claims.

**Claims**

1. A detection apparatus, comprising:

   an emission module, a receiving module, an optical fiber, and an optical assembly, wherein the emission module is configured to emit a first light beam;
   the optical assembly is configured to transmit the first light beam to the optical fiber;
   the optical fiber is configured to transmit the first light beam to the receiving module; and
   the receiving module is configured to receive the first light beam.

2. The apparatus according to claim 1, wherein the detection apparatus further comprises a processing module;

   the processing module is configured to obtain a first electrical signal, wherein the first electrical signal is used to cause the emission module to emit the first light beam;

the processing module is configured to receive a second electrical signal, wherein the second electrical signal corresponds to the first light beam received by the receiving module; and

the processing module is configured to calculate a time difference between the first electrical signal and the second electrical signal.

3. The apparatus according to claim 1 or 2, wherein the optical assembly comprises a scanning module; and a first scanning angle of the scanning module is used for the first light beam to be transmitted to the optical fiber, and the first scanning angle of the scanning module is an angle at which the detection apparatus does not detect an external target.

4. The apparatus according to claim 3, wherein the scanning module is a polyhedron rotating mirror.

5. The apparatus according to any one of claims 1 to 4, wherein
the optical assembly comprises at least one reflector.

6. The apparatus according to any one of claims 1 to 5, wherein
an energy loss value of the first light beam is greater than a first threshold and less than a second threshold, and a range of the energy loss value of the first light beam is related to an emission power range of the emission module and a receiving power range of the receiving module.

7. The apparatus according to any one of claims 1 to 6, wherein a value of an optical fiber span energy loss of the first light beam is β, and β satisfies the following formula:

$$\beta = 10 \times \log(P\_in/P\_out),$$

wherein
P_in is a magnitude of input energy of the optical fiber, and P_out is a magnitude of output energy of the optical fiber.

8. The apparatus according to any one of claims 1 to 7, wherein

a receiving end of the optical fiber is fastened at a first position, and an angle at which the first light beam is incident to the optical fiber is a first angle θ; and

the energy loss value of the first light beam is related to at least one of the first position and the first angle θ.

9. The apparatus according to any one of claims 1 to 8, wherein

the receiving module comprises a detection element and a fastening apparatus, and the fastening apparatus is provided with a through hole;

an emergent end of the optical fiber is fastened at a second position, and the first light beam is transmitted to the receiving module through the through hole; and

the energy loss value of the first light beam is related to the second position.

10. The apparatus according to any one of claims 1 to 9, wherein

the energy loss value of the first light beam is related to an optical fiber parameter; and

the optical fiber parameter comprises a core diameter of the optical fiber and a numerical aperture of the optical fiber.

11. The apparatus according to any one of claims 1 to 10, wherein
the emission module comprises one or more light emitting elements.

12. The apparatus according to any one of claims 1 to 11, wherein

the apparatus further comprises a coupler; and

the coupler is configured to couple a plurality of optical fibers into one optical fiber, to transmit the first light beam to the receiving module.

13. The apparatus according to any one of claims 1 to 12, wherein

the apparatus further comprises an optical fiber fastening module, wherein the optical fiber fastening module is configured to fasten the optical fiber; and

the optical fiber fastening module is a glass tube or an optical fiber clamp, the optical fiber clamp is provided with a groove, and the first angle θ is related to an angle of the groove.

14. A detection apparatus, comprising:

an emission module, a receiving module, and an optical fiber, wherein

the emission module is configured to emit a detection light beam, wherein the detection light beam comprises a main light part and a residual light part, the main light part of the detection light beam is used to detect an external target, and the residual light part of the detection light beam is transmitted to the optical fiber;

the optical fiber is configured to transmit the residual light part of the detection light beam to the receiving module; and
the receiving module is configured to receive the residual light part of the detection light beam.

15. The apparatus according to claim 14, wherein the detection apparatus further comprises a processing module;

the processing module is configured to obtain a first electrical signal, wherein the first electrical signal is used to cause the emission module to emit the detection light beam;
the processing module is configured to receive a second electrical signal, wherein the second electrical signal corresponds to the residual light part that is of the detection light beam and that is received by the receiving module; and
the processing module is configured to calculate a time difference between the first electrical signal and the second electrical signal.

16. The apparatus according to claim 14 or 15, wherein a first emission angle of the emission module is used for the residual light part of the detection light beam to be transmitted to the optical fiber.

17. The apparatus according to any one of claims 14 to 16, wherein
an energy loss value of the residual light part of the detection light beam is greater than a first threshold and less than a second threshold, and a range of the energy loss value of the residual light part of the detection light beam is related to an emission power range of the emission module and a receiving power range of the receiving module.

18. The apparatus according to any one of claims 14 to 17, wherein a value of an optical fiber span energy loss of the residual light part of the detection light beam is β, and β satisfies the following formula:

$$\beta = 10 \times \log(P\_in/P\_out),$$

wherein
P_in is a magnitude of input energy of the optical fiber, and P_out is a magnitude of output energy of the optical fiber.

19. The apparatus according to any one of claims 14 to 18, wherein

a receiving end of the optical fiber is fastened at a first position, and an angle at which the residual light part of the detection light beam is incident to the optical fiber is a first angle θ; and

the energy loss value of the residual light part of the detection light beam is related to at least one of the first position and the first angle θ.

20. The apparatus according to any one of claims 14 to 19, wherein

the receiving module comprises a detection element and a fastening apparatus, and the fastening apparatus is provided with a through hole;
an emergent end of the optical fiber is fastened at a second position, and the first light beam is transmitted to the receiving module through the through hole; and
the energy loss value of the residual light part of the detection light beam is related to the second position.

21. The apparatus according to any one of claims 14 to 20, wherein

the energy loss value of the residual light part of the detection light beam is related to an optical fiber parameter; and
the optical fiber parameter comprises a core diameter of the optical fiber and a numerical aperture of the optical fiber.

22. The apparatus according to any one of claims 14 to 21, wherein
the emission module comprises one or more light emitting elements.

23. The apparatus according to claim 22, wherein the residual light part of the detection light beam comprises a first part of residual light, the first part of residual light is emitted out of the emission module, and an incident end of the optical fiber is located outside the emission module;

the optical fiber is specifically configured to: receive the first part of residual light from the light emitting element, and transmit the first part of residual light to the receiving module; and
the receiving module is specifically configured to receive the first part of residual light.

24. The apparatus according to claim 22, wherein the residual light part of the detection light beam comprises a second part of residual light, the second part of residual light is not emitted out of the emission module, and an incident end of the optical fiber is located inside the emission module;

the optical fiber is specifically configured to: receive the second part of residual light from the light emitting element, and transmit the second part of residual light to the receiving module;

and
the receiving module is specifically configured to receive the second part of residual light.

25. The apparatus according to any one of claims 16 to 24, wherein

the apparatus further comprises a coupler; and the coupler is configured to couple a plurality of optical fibers into one optical fiber, to transmit the residual light part of the detection light beam to the receiving module.

26. The apparatus according to any one of claims 16 to 25, wherein

the apparatus further comprises an optical fiber fastening module, wherein the optical fiber fastening module is configured to fasten the optical fiber; and
the optical fiber fastening module is a glass tube or an optical fiber clamp, the optical fiber clamp is provided with a groove, and the first angle $\theta$ is related to an angle of the groove.

27. A detection apparatus, comprising:

an emission module, a receiving module, and an optical fiber, wherein
the emission module comprises a plurality of light emitting elements, and a first light emitting element in the plurality of light emitting elements is configured to: emit a second light beam, and transmit the second light beam to the optical fiber;
the optical fiber is configured to transmit the second light beam to the receiving module; and
the receiving module is configured to receive the second light beam.

28. The apparatus according to claim 27, wherein the detection apparatus further comprises a processing module;

the processing module is configured to obtain a first electrical signal, wherein the first electrical signal is used to cause the emission module to emit the second light beam;
the processing module is configured to receive a second electrical signal, wherein the second electrical signal corresponds to the second light beam received by the receiving module; and
the processing module is configured to calculate a time difference between the first electrical signal and the second electrical signal.

29. The apparatus according to claim 27 or 28, wherein the second light beam is emitted out of the emission module, and an incident end of the optical fiber is located outside the emission module; or the second light beam is not emitted out of the emission module, and an incident end of the optical fiber is located inside the emission module.

30. The apparatus according to any one of claims 27 to 29, wherein a first emission angle of the first light emitting element is used for the second light beam to be transmitted to the optical fiber.

31. A detection apparatus, comprising:

an emitter, a receiver, an optical fiber, and a first optical lens group, wherein
the emitter is configured to emit a first light beam;
the first optical lens group is configured to transmit the first light beam to the optical fiber;
the optical fiber is configured to transmit the first light beam to the receiver; and
the receiver is configured to receive the first light beam.

32. The apparatus according to claim 31, wherein the detection apparatus further comprises a processor;

the processor is configured to obtain a first electrical signal, wherein the first electrical signal is used to cause the emitter to emit the first light beam;
the processor is configured to receive a second electrical signal, wherein the second electrical signal corresponds to the first light beam received by the receiver; and
the processor is configured to calculate a time difference between the first electrical signal and the second electrical signal.

33. The apparatus according to claim 31 or 32, wherein the apparatus further comprises a polyhedron rotating mirror; and
a first scanning angle of the polyhedron rotating mirror is used for the first light beam to be transmitted to the optical fiber, and the first scanning angle of the polyhedron rotating mirror is an angle at which the detection apparatus does not detect an external target.

34. A detection apparatus, comprising:

an emitter, a receiver, and an optical fiber, wherein
the emitter is configured to emit a detection light beam, wherein the detection light beam comprises a main light part and a residual light part, the main light part of the detection light beam is used to detect an external target, and the residual light part of the detection light beam is transmitted to the optical fiber;

the optical fiber is configured to transmit the residual light part of the detection light beam to the receiver; and

the receiver is configured to receive the residual light part of the detection light beam.

35. The apparatus according to claim 34, wherein the detection apparatus further comprises a processor;

the processor is configured to obtain a first electrical signal, wherein the first electrical signal is used to cause the emitter to emit the detection light beam;

the processor is configured to receive a second electrical signal, wherein the second electrical signal corresponds to the residual light part that is of the detection light beam and that is received by the receiver; and

the processor is configured to calculate a time difference between the first electrical signal and the second electrical signal.

36. The apparatus according to claim 34 or 35, wherein a first emission angle of the emitter is used for the residual light part of the detection light beam to be transmitted to the optical fiber.

37. The apparatus according to any one of claims 34 to 36, wherein

the emitter comprises one or more light emitting elements.

38. The apparatus according to claim 37, wherein the residual light part of the detection light beam comprises a first part of residual light, the first part of residual light is emitted out of the emitter, and an incident end of the optical fiber is located outside the emitter;

the optical fiber is specifically configured to: receive the first part of residual light from the light emitting element, and transmit the first part of residual light to the receiver; and

the receiver is specifically configured to receive the first part of residual light.

39. The apparatus according to claim 38, wherein the residual light part of the detection light beam comprises a second part of residual light, the second part of residual light is not emitted out of the emitter, and the incident end of the optical fiber is located inside the emitter;

the optical fiber is specifically configured to: receive the second part of residual light from the light emitting element, and transmit the second part of residual light to the receiver; and

the receiver is specifically configured to receive the second part of residual light.

40. A terminal device, wherein the terminal device comprises the detection apparatus according to any one of claims 1 to 39.

41. The terminal according to claim 40, wherein the terminal is a vehicle, an uncrewed aerial vehicle, or a robot.

42. An optical loopback method, wherein the method is applied to a detection apparatus, the detection apparatus comprises an emission module, a receiving module, an optical fiber, and an optical assembly, and the method comprises:

emitting, by the emission module, a first light beam;

transmitting, by the optical assembly, the first light beam to the optical fiber;

transmitting, by the optical fiber, the first light beam to the receiving module; and

receiving, by the receiving module, the first light beam.

43. The method according to claim 42, wherein the detection apparatus further comprises a processing module, and the method further comprises:

obtaining, by the processing module, a first electrical signal, wherein the first electrical signal is used to cause the emission module to emit the first light beam;

receiving, by the processing module, a second electrical signal, wherein the second electrical signal corresponds to the first light beam received by the receiving module; and

calculating, by the processing module, a time difference between the first electrical signal and the second electrical signal.

44. The method according to claim 42 or 43, wherein the optical assembly comprises a scanning module; and the scanning module transmits the first light beam to the optical fiber at a first scanning angle, wherein the first scanning angle of the scanning module is an angle at which the detection apparatus does not detect an external target.

45. The method according to any one of claims 42 to 44, wherein a value of an optical fiber span energy loss of the first light beam is $\beta$, and $\beta$ satisfies the following formula:

$$\beta = 10 \times \log(P\_in/P\_out),$$

wherein
P_in is a magnitude of input energy of the optical fiber, and P_out is a magnitude of output energy of the optical fiber.

46. The method according to any one of claims 42 to 45, wherein
a receiving end of the optical fiber is fastened at a first position, an angle at which the first light beam is incident to the optical fiber is a first angle θ, and an energy loss value of the first light beam is related to at least one of the first position and the first angle θ.

47. The method according to any one of claims 42 to 46, wherein
the receiving module comprises a detection element and a fastening apparatus, the fastening apparatus is provided with a through hole, an emergent end of the optical fiber is fastened at a second position, and the first light beam is transmitted to the detection element through the through hole, wherein the energy loss value of the first light beam is related to the second position.

48. The method according to any one of claims 42 to 47, wherein
the energy loss value of the first light beam is related to an optical fiber parameter, and the optical fiber parameter comprises a core diameter of the optical fiber and a numerical aperture of the optical fiber.

49. The method according to any one of claims 42 to 48, wherein
the emission module comprises one or more light emitting elements.

50. The method according to any one of claims 42 to 49, wherein

the apparatus further comprises a coupler; and
the coupler couples a plurality of optical fibers into one optical fiber, to transmit the first light beam to the receiving module.

51. The method according to any one of claims 42 to 50, wherein

the apparatus further comprises an optical fiber fastening module, wherein the optical fiber fastening module fastens the optical fiber; and
the optical fiber fastening module is a glass tube or an optical fiber clamp, the optical fiber clamp is provided with a groove, and the first angle θ is related to an angle of the groove.

52. An optical loopback method, wherein the method is applied to a detection apparatus, the detection apparatus comprises an emission module, a receiving module, and an optical fiber, and the method comprises:

the emission module, the receiving module, and the optical fiber;
emitting, by the emission module, a detection light beam, wherein the detection light beam comprises a main light part and a residual light part, the main light part of the detection light beam is used to detect an external target, and the residual light part of the detection light beam is transmitted to the optical fiber;
transmitting, by the optical fiber, the residual light part of the detection light beam to the receiving module; and
receiving, by the receiving module, the residual light part of the detection light beam.

53. The method according to claim 52, wherein the detection apparatus further comprises a processing module, and the method further comprises:

the processing module is configured to obtain a first electrical signal, wherein the first electrical signal is used to cause the emission module to emit the detection light beam;
the processing module is configured to receive a second electrical signal, wherein the second electrical signal corresponds to the residual light part that is of the detection light beam and that is received by the receiving module; and
the processing module is configured to calculate a time difference between the first electrical signal and the second electrical signal.

54. The method according to claim 52 or 53, wherein the residual light part of the detection light beam comprises a first part of residual light, the first part of residual light is emitted out of the emission module, an incident end of the optical fiber is located outside the emission module, and the transmitting, by the optical fiber, the residual light part of the detection light beam to the receiving module comprises: receiving, by the optical fiber, the first part of residual light, and transmitting the first part of residual light to the receiving module; and
the receiving, by the receiving module, the residual light part of the detection light beam comprises: receiving, by the receiving module, the first part of residual light.

55. The method according to claim 52 or 53, wherein the residual light part of the detection light beam comprises a second part of residual light, the second part of residual light is not emitted out of the emission module, an incident end of the optical fiber is located inside the emission module, the emission module comprises one or more light emitting elements, and the transmitting, by the optical fiber, the residual light part of the detection light beam to the receiving module comprises: receiving, by the optical fiber, the second part of residual light from the light emitting element, and transmitting the second part of residual light to the receiving module; and

the receiving, by the receiving module, the residual light part of the detection light beam comprises: receiving, by the receiving module, the second part of residual light.

FIG. 1

FIG. 2a

FIG. 2b

FIG. 2c

FIG. 3

Optical assembly

| Optical assembly |
|---|

Transmission module

Receiving module

Optical fiber

Detection apparatus

FIG. 4a

FIG. 4b

FIG. 4c

Reflector

Transmission module

Receiving module

Optical fiber

Detection apparatus

FIG. 5

FIG. 6a

Reflector

Scanning
module

Transmission
module

Receiving
module

Optical
fiber

Detection apparatus

FIG. 6b

Detection
light beam

Main
light part

First part of
residual light

Second part of
residual light

Light emitting
element

Transmission
module

Circuit board

FIG. 6c

Main light
part
Detection
light beam

First part
of residual
light

Transmission
module

Receiving
module

Optical fiber

Detection apparatus

FIG. 6d

FIG. 6e

FIG. 6f

First light
beam

Second light beam

Second
light
emitting
element

First light
emitting
element

Transmission
module

Receiving
module

Optical fiber

Detection apparatus

FIG. 6g

Optical
fiber

Fastening
apparatus

Detection
element

Second position

Light beam

Lighted area of the
detection element

FIG. 7

Receiving
module

Optical fiber

Optical assembly

FIG. 8

Optical
assembly

Scanning
module

**First angle θ**

Transmission
module

First position of a
receiving end

Receiving
module

Optical
fiber

Detection apparatus

FIG. 9

FIG. 10a

FIG. 10b

Reflector

Transmission
module

Receiving
module

Optical fiber

Processing
module

Detection apparatus

FIG. 11

Glass tube

Optical fiber

FIG. 12a

Optical fiber

Groove

Optical fiber
clamp

FIG. 12b

## INTERNATIONAL SEARCH REPORT

| | International application No. |
|---|---|
| | **PCT/CN2023/129532** |

### A. CLASSIFICATION OF SUBJECT MATTER

H04J 14/02(2006.01)i; G01S7/4861(2020.01)i

According to International Patent Classification (IPC) or to both national classification and IPC

### B. FIELDS SEARCHED

Minimum documentation searched (classification system followed by classification symbols)

IPC: H04J G01S

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, CJFD: 探测, 光纤, 发射, 接收, 光学模组, 反射镜, detect+, optical fiber, transmit, receiv+, reflector

### C. DOCUMENTS CONSIDERED TO BE RELEVANT

| Category* | Citation of document, with indication, where appropriate, of the relevant passages | Relevant to claim No. |
|---|---|---|
| X | CN 216979280 U (SHANGHAI KUNYOU TECHNOLOGY CO., LTD.) 15 July 2022 (2022-07-15)<br>description, paragraphs [0003]-[0018], [0029]-[0037], and [0049]-[0075] | 1-55 |
| X | WO 2019192038 A1 (DEEPWATER OPTOELECTRONICS CO., LTD.) 10 October 2019 (2019-10-10)<br>description, page 2, paragraph 1 to page 4, paragraph 5, and page 5, paragraph 2 to page 6, paragraph 3, and figures 1-2 and 6 | 1-13, 27-33, 40-51 |
| X | CN 111337901 A (KYLE OPTICS TECHNOLOGY CO., LTD.) 26 June 2020 (2020-06-26)<br>description, paragraphs [0045]-[0074], and figure 1 | 1-13, 27-33, 40-51 |
| A | CN 113614564 A (HUAWEI TECHNOLOGIES CO., LTD.) 05 November 2021 (2021-11-05)<br>entire document | 1-55 |
| A | CN 211426800 U (BEIJING METSTAR RADAR CO., LTD.) 04 September 2020 (2020-09-04)<br>entire document | 1-55 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 January 2024** | **23 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/129532**

| Patent document cited in search report | | | Publication date (day/month/year) | Patent family member(s) | | | Publication date (day/month/year) |
|---|---|---|---|---|---|---|---|
| CN | 216979280 | U | 15 July 2022 | None | | | |
| WO | 2019192038 | A1 | 10 October 2019 | JP | 2021517634 | A | 26 July 2021 |
| | | | | EP | 3570064 | A1 | 20 November 2019 |
| | | | | CN | 110346774 | A | 18 October 2019 |
| | | | | US | 2019310353 | A1 | 10 October 2019 |
| CN | 111337901 | A | 26 June 2020 | WO | 2021197403 | A1 | 07 October 2021 |
| | | | | CN | 212321830 | U | 08 January 2021 |
| CN | 113614564 | A | 05 November 2021 | WO | 2023279375 | A1 | 12 January 2023 |
| CN | 211426800 | U | 04 September 2020 | None | | | |

Form PCT/ISA/210 (patent family annex) (July 2022)

**REFERENCES CITED IN THE DESCRIPTION**

**Patent documents cited in the description**

* CN 2022135064 W